# EUROPÄISCHE PATENTSCHRIFT

(11) **EP 3 457 888 B1**
(45) Veröffentlichungstag und Bekanntmachung des Hinweises auf die Patenterteilung: **18.11.2020**
(21) Anmeldenummer: 17723690.8
(22) Anmeldetag: 15.05.2017
(51) Int. Cl.: A46B 9/02, A46D 1/00, A45D 40/26

(54) **KOSMETIKAPPLIKATOR MIT SPEZIELLER BORSTE**
COSMETIC APPLICATOR WITH SPECIAL BRISTLE
APPLICATEUR DE COSMÉTIQUE DOTÉ DE SOIES SPÉCIALES

(30) Priorität: 17.05.2016 DE 202016102620 U
(43) Veröffentlichungstag der Anmeldung: 27.03.2019
(73) Patentinhaber: GEKA GmbH, 91572 Bechhofen (DE)
(72) Erfinder: FISCHER, Werner, 91596 Burk (DE)
(74) Vertreter: Misselhorn, Hein-Martin
(86) Internationale Anmeldenummer: PCT/EP2017/061609
(87) Internationale Veröffentlichungsnummer: WO 2017/198614

(56) Entgegenhaltungen:
- FR-A1- 2 930 874
- FR-A1- 2 993 441
- US-A1- 2015 020 332
- US-B1- 7 665 473

## Beschreibung

Die Erfindung betrifft einen Kosmetikapplikator nach dem Oberbegriff des Anspruchs 1, ein entsprechendes Kosmetikapplikatorsystem und eine Spritzgussform zur Herstellung eines entsprechenden Kosmetikapplikators.

### Technischer Hintergrund

Das Applikationsverhalten eines Kosmetikapplikators wird entscheidend davon beeinflusst, wie gut die Beladung des Kosmetikapplikators mit dem zu applizierenden Kosmetikum gesteuert werden kann. Dies gilt insbesondere für solche Kosmetikapplikatoren, wie sie hier in Rede stehen, die zur Applikation in einen Kosmetikbehälter und das dort befindliche Kosmetikum hineingesteckt gelagert werden, um dann aus dem Kosmetikbehälter heraus durch einen Abstreifer hindurchgezogen zu werden und mit der benötigten Beladung zur Applikation bereitzustehen.

Regelmäßig wird versucht, die Beladung des Kosmetikapplikators über die rheologischen Eigenschaften des Kosmetikums und/oder die Dichte des Borstenbesatzes sowie über die Interaktion zwischen dem Borstenbesatz und dem Abstreifer zu steuern. Das gelingt im Großen und Ganzen bereits sehr gut, je nachdem, welches Kosmetikum verarbeitet werden soll.

Es besteht aber immer noch Verbesserungsbedarf.

Das gilt insbesondere dort, wo das aufzutragende Kosmetikum eine Mascaramasse ist, da gerade bei der Mascaraapplikation extrem hohe Anforderungen gestellt werden. Zum einen soll es hier möglich sein, möglichst nur einmal eintauchen zu müssen, um eine komplette Mascaraapplikation an einem Wimpernbogen ausführen zu können. Zum anderen müssen die

Mascaraapplikatoren hervorragende Trenneigenschaften aufweisen, damit die einzelnen Wimpern nicht verkleben. Zudem wird häufig von ihnen die Fähigkeit zum sogenannten Curling verlangt, d. h. die Fähigkeit, den Wimpern eine attraktive Krümmung zu verleihen.

Im Stand der Technik sind auch schon profilierte Borsten für Kosmetik-Mascaraapplikatoren vorgeschlagen worden. Insoweit ist auf die DE 102 12 701 A1 zu verweisen.

Die von dieser Anmeldung vorgeschlagenen, profilierten Borsten bereiten jedoch durchweg Schwierigkeiten bei der Herstellung des Applikators. Denn diese Borsten mit der hier angegebenen Profilierung lassen sich nach ihrer Herstellung im Wege des Spritzgießens oft nicht zuverlässig ausformen. Gelegentlich reißen zumindest einzelne Borsten ab, wenn sich die in der Spritzgussform erstarrte, aber noch warme Kunststoffmasse im Bereich der Profilierung beim Öffnen der Spritzgussform nicht schnell genug von der Wand der borstenformenden Kavität ablöst, um ungehindert aus der Kavität herausgezogen werden zu können.

Aus dem US-Patent US 7665473 B1 sind Applikatoren bekannt, die aus zwei Applikatorhälften bestehen, die durch ein Filmscharnier miteinander verbunden sind. Jede der Applikatorhälften trägt Borsten. Beim Zusammenklappen der Applikatorhälften kommen die von der einen Hälfte getragenen Borsten jeweils in den Zwischenraum zwischen zwei benachbarte Borsten an der anderen Applikatorhälfte zu liegen.

Aus der französischen Patentanmeldung FR 2 930 874 sind Borsten bekannt, die sich teilweise oder vollständig überlappend einander gegenüberstehen.

Aus der französischen Patentanmeldung FR 2 993 441 sind geschichtet aufgebaute Spritzgussformen bekannt, die sich durch Hinzufügen und Wegnehmen von Schichten vereinfacht umbauen lassen, um Applikatoren mit Borstenreihen zu spritzen, die einen größeren oder kleineren Abstand haben.

### Das der Erfindung zugrunde liegende Problem

Demgegenüber ist es die Aufgabe der Erfindung, einen Applikator mit Borsten bereitzustellen, dessen nach dem Abstreifen verbleibende Beladung sich vom Konstrukteur fein einstellen lässt und der sich problemlos herstellen lässt.

### Die erfindungsgemäße Lösung

Die Lösung erfolgt mit den Mitteln des Anspruchs 1.

Vorgeschlagen wird demnach ein Kosmetikapplikator mit einem Borstenträger, der in einen Stiel übergeht, mit dem der Borstenträger mit einer Handhabe verbunden ist, oder der in einen Kupplungsabschnitt zur Verbindung des Borstenträgers mit einem solchen Stiel übergeht.

Der Borstenträger trägt eine Vielzahl von jeweils einstückigen Borsten, die eine Gesamtlänge L aufweisen. Die Borsten bestehen jeweils aus zwei relativ zueinander achsensymmetrischen, d. h. sich entsprechenden, gedachten Hälften. Die beiden Hälften sind entlang einer Ebene, in der sich ihre Symmetrieachse befindet, relativ zueinander verschoben. Da die Hälften (als solche) nur gedachter Natur sind, sind sie einstückig miteinander verbunden und bilden dadurch ein Ganzes. Jede dieser Hälften bildet einen ebenen Bereich an der Borste aus, der in der Verschiebeebene liegt.

Durch diese Art der Gestaltung entsteht eine integrale Borste, die entlang ihrer Flanke in Richtung parallel zur Borstenlängsachse eine Vertiefung aufweist, die durch das Eintauchen der Borste in den Kosmetikvorrat mit Kosmetikum aufgefüllt wird, das auch beim Durchgang durch den Abstreifer im Wesentlichen nicht abgezogen wird, sondern in der Vertiefung der Borste verbleibt. Je nachdem, um welchen Betrag die beiden Hälften entlang der Verschiebeebene relativ zueinander verschoben werden, lässt sich diese Vertiefung vom Konstrukteur mehr oder minder stark ausgeprägt gestalten.

Gleichzeitig lassen sich derartige Borsten einfach und mit deutlich verringertem Ausschussrisiko herstellen.

### Bevorzugte Ausgestaltungsmöglichkeiten

Idealerweise trägt der Borstenträger eine Vielzahl von jeweils einstückigen Borsten, die auf ganzer Länge L einen Borstenquerschnitt aufweisen, der aus zwei Teilen besteht, die in einer Ebene relativ zueinander verschoben sind.

Vorzugsweise verjüngen sich die Borsten von ihrem Fuß bis zu ihrer Spitze stetig. Im Idealfall schließt die Hüllfläche einer Borste überall einen Winkel von ≤ 7,5° mit der Längsachse L der Borste ein.

Darüber hinaus ist die Borste vorzugsweise so ausgestaltet, dass die beiden Hälften entlang ihrer Symmetrieachse relativ zueinander so weit verschoben sind, dass sich die Spitzen der beiden Hälften auf einer Fläche von mindestens 30 % berühren. Dadurch entsteht eine einheitliche Spitze und es wird verhindert, dass Wimpern im engen Spalt zwischen zwei getrennten Spitzen eingeklemmt werden und beim Gebrauch des Applikators der unbeabsichtigte Eindruck eines Ziehens an den Wimpern entsteht.

Idealerweise bestehen die Borsten aus zwei zueinander achsensymmetrischen Pyramidenhälften. Die entsprechende Pyramide - aus den nicht zueinander verschoben gedachten Pyramidenhälften - weist eine quadratische, rechteckige, rautenförmigen oder sechseckige Grundfläche auf. Derartige Borsten zeigen im Rahmen der Applikation eine besonders günstige Steifigkeit und ein günstiges Biegeverhalten, gleichzeitig lässt sich besonders einfach die erfindungsgemäße Ebene zwischen solchen Borsten ausbilden, in der die Borstenhälften zueinander verschoben angeordnet werden.

Alternativ kann es für manche Anwendungsfälle günstig sein, die Borste so zu gestalten, dass sie aus zwei zueinander achsensymmetrischen Kegelhälften besteht, die - nicht relativ zueinander verschoben - eine kreisrunde, elliptische, ovale, mandelförmige oder pflaumenförmige Grundfläche aufweisen.

Besonders gut können die Borsten mit den Wimpern in Interaktion treten, wenn die Kanten, die durch Verschiebung der Pyramiden-Kegelhälften entstehen, scharfkantig sind und vorzugsweise mit einem Radius RA ≤ 0,01 mm ineinander übergehen.

Besonders bevorzugt ist es, wenn auch das distale Ende des Borstenträgers an seiner freien Stirnseite mit Stirnborsten besetzt ist. Idealerweise liegen in der Ebene, in der auch die Längsachse des Applikators liegt, die Längsachsen von mindestens vier der Stirnborsten. In der Ebene der Längsachse des Applikators wird dann im Idealfall ein Borstenfächer aufgespannt, der besonders gut zum Kämmen der Wimpern geeignet ist, wenn man den Applikator frontal mit seiner Stirnseite an den Wimpernbogen heranführt.

### Die zur Herstellung der erfindungsgemäßen Borsten zum Einsatz kommende Spritzgussform

Zur Herstellung der erfindungsgemäßen Borste können aufgrund deren speziellen Designs nämlich erstmals Spritzgussformen zum Einsatz kommen, die wie folgt gestaltet sind:
Die Spritzgussform bildet Borstenkavitäten aus, von denen jeweils eine Borste abbildet. Die Spritzgussform ist in mehrere kreissektorförmige Formteile unterteilt. Diese können in radialer Richtung auseinanderbewegt werden, um so einen zuvor mithilfe der Spritzgussform spritzgegossenen Applikator entformen zu können. Die Spritzgussform ist dabei so gestaltet, dass ein erstes und ein zweites kreissektorförmiges Formteil, die mit ihren ebenen Flanken entlang einer Trennlinie parallel zur Längsachse der Spritzgussform gegeneinander anliegen, die Kavitäten für eine in Richtung parallel zur Applikatorlängsachse verlaufende Borstenreihe bilden. Dies, indem eine erste Hälfte der jeweiligen Kavitäten in einen ersten kreissektorförmigen Formteil ausgebildet ist und eine zweite Hälfte der Kavitäten in einen zweiten kreissektorförmigen Formteil ausgebildet ist. Die erste und die zweite Hälfte der jeweiligen, insgesamt eine einzige Borste formenden Kavität sind in Richtung der Trennebene relativ zueinander verschoben positioniert, d. h. die Trennebene zwischen den Formteilen entspricht hier der Verschiebeebene 5. Diese beiden Hälften überlappen sich dabei teilweise. Das bedeutet, dass die beiden mit ihren Flanken gegeneinander anliegenden ersten und zweiten kreissektorförmigen Formteile der Spritzgussform jede der genannten Borsten gemeinsam abbilden. Um sicher ausformen zu können, genügt es, wenn die beiden kreissektorförmigen Formteile in radialer Richtung etwas auseinanderbewegt werden, wodurch sie sich sofort von der jeweiligen Borste abheben. Auch die beiden Nuten bzw. Vertiefungen, die die Borsten jeweils auf diese Art und Weise erhalten haben, bereiten beim Ausformen kein Problem. Denn die Nuten bzw. Vertiefungen liegen genau in der Trennstelle zwischen dem ersten und dem zweiten kreissektorförmigen Formteil, also in dem Bereich, wo beim Öffnen der Form auseinanderbewegt wird und daher die Borste sofort freigegeben wird.

### Sonstiges

Weiterhin wird die Verwendung des Kosmetikapplikators mit den erfindungsgemäßen Borsten beschrieben, also die Verwendung eines Kosmetikapplikators, die sich dadurch auszeichnet, dass durch Eintauchen des Kosmetikapplikators in und Herausziehen des Kosmetikapplikator aus einem Kosmetikvorrat durch einen Abstreifer hindurch Kosmetikmasse entnommen wird und mithilfe des Kosmetikapplikators an die zu behandelnden Wimpern transportiert und dort zumindest teilweise abgegeben wird.

Ebenfalls eigenständiger Schutz wird beansprucht für ein Kosmetikapplikatorsystem umfassend einen Kosmetikvorratsbehälter, darin bevorratet gehaltene Kosmetikmasse, vorzugsweise in Gestalt von Mascaramasse, einen Abstreifer und einen Applikator, der in unbenutztem Zustand durch den Abstreifer hindurch in den Kosmetikbehälter eingeschoben ist und in den Kosmetikvorrat eintaucht und der zum Zwecke der Applikation durch den Abstreifer hindurch aus dem Kosmetikvorratsbehälter herausgezogen und an die zu behandelnde Stelle herangeführt werden kann, wobei sich das Kosmetikapplikatorsystem dadurch auszeichnet, dass der Applikator ein Applikator nach einem der hier aufgestellten Schutzansprüche ist.

Ebenfalls hierin beschrieben wird ein Kosmetikapplikator mit einem Borstenträger, der in einen Stiel übergeht, mit dem der Borstenträger mit einer Handhabe verbunden ist, oder in einen Kupplungsabschnitt zur Verbindung des Borstenträgers mit einem solchen Stiel, wobei der Borstenträger eine Vielzahl von jeweils einstückigen Borsten mit der Länge trägt, dadurch gekennzeichnet, dass die Borsten auf ganzer Länge einen Borstenquerschnitt aufweisen, der aus zwei Teilen besteht, die in einer Ebene relativ zueinander verschoben sind.

Ebenfalls wird ein Kosmetikapplikator beansprucht, der sich dadurch auszeichnet, dass das distale Ende des Borstenträgers an seiner freien Stirnseite mit Stirnborsten besetzt ist.

Weitere Wirkungsweisen, Ausgestaltungsmöglichkeiten und Vorzüge der Erfindung ergeben sich aus der Beschreibung der Ausführungsbeispiele anhand der nachfolgend aufgelisteten Figuren.

### Figurenliste

Die Figur 1 illustriert abstrakt-generell, was im Sinne der Erfindung unter einer Borste verstanden wird.
Die Figur 2 zeigt eine erfindungsgemäße Borste für den erfindungsgemäßen Applikator frontal von oben.
Die Figur 2a zeigt die Borste gemäß Figur 2 in mit Kosmetikmasse beladenem Zustand.
Die Figur 3 zeigt die Borste gemäß Figur 2 von der Seite her gesehen, in perspektivischer Ansicht.
Die Figur 4a zeigt ein Ausführungsbeispiel eines gesamten Kosmetikapplikators mit Borsten gemäß Figur 2 in einer ersten Verdrehposition.
Die Figur 4b zeigt eine Ausschnittvergrößerung aus der Figur 4a.
Die Figur 5a zeigt ein Ausführungsbeispiel des gesamten Kosmetikapplikators mit Borsten gemäß Figur 2 in einer zweiten Verdrehposition.
Die Figur 5b zeigt eine Ausschnittvergrößerung aus der Figur 5a.
Die Figur 6 zeigt einen Ausschnitt aus einer Spritzgussform, wie sie zur Herstellung der erfindungsgemäßen Borsten bzw. Applikatoren verwendet wird.
Die Figur 7 zeigt eine Gesamtansicht eines erfindungsgemäßen Applikators mit Stiel und Handhabe.

### Ausführungsbeispiele

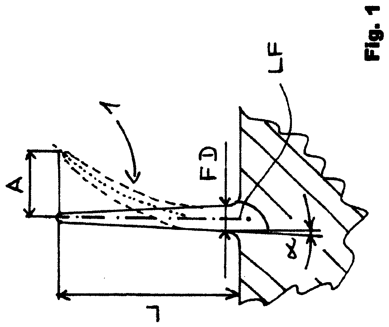

Die Figur 1 zeigt zunächst vorab, was im Sinne der Erfindung bevorzugt unter dem Begriff Borste verstanden wird - ohne bereits die erfindungsgemäße Profilierung der Borste zu veranschaulichen.

Eine Borste ist demnach ein schlanker, vollständig oder im Wesentlich vollständig von dem Borstenträger aus in radialer Richtung nach außen abstehender Biegestab aus Kunststoff.

Die maximale Erstreckung FD einer Borste im Bereich ihres Fußes beträgt vorzugsweise zwischen 0,01 mm bis 0,06 mm. Als Fußbereich einer Borste bezeichnet man hier denjenigen, am dichtesten an dem Borstenträger liegenden Bereich einer Borste, der noch ungestört ist, also oberhalb der Verrundung liegt, mit dem die Borste in den Borstenträger übergehen mag, vgl. auch Fig. 1.

Die Länge einer Borste entlang der Borstenlängsachse L ist vorzugsweise mindestens um den Faktor 5, besser mindestens um den Faktor 7 größer als die größte Erstreckung FD der Borste in ihrem Fußbereich.

Eine Borste ist typischerweise derart elastisch, dass sie durch die bei der Applikation auftretenden Kräfte flexibelelastisch gegenüber ihrem Lotfußpunkt LF um einen Betrag A quer zu ihrer Borstenlängsachse (verglichen mit dem unbelasteten Zustand) ausgelenkt werden kann, der dem mindestens 4-fachen, besser dem mindestens 6-fachen der größten Erstreckung FD der Borste im Fußbereich entspricht.

Die maximale Erstreckung FD einer Borste im Bereich ihres Borstenfußpunktes beträgt vorzugsweise zwischen 0,01 mm bis 0,06 mm.

Eine Borste im erfindungsgemäßen Sinne ist im Regelfall durch Spritzgießen entstanden. Spritzgießen ist dabei nicht nur ein Herstellungsverfahren, sondern prägt der Borste auch ihre physische Gestalt auf. Spritzgegossene Borsten zeichnen sich dadurch aus, dass die Kunststoffmolekülketten im Bereich der Borste selbst, wo die Spritzgusskavität ja von Natur aus sehr eng ist, auf besondere Art und Weise in Längsrichtung orientiert und überwiegend entknäuelt sind. Dadurch erhalten die Borsten gute elastische Eigenschaften und ein besonders gutes Bend-Recovery-Vermögen.

Dies führt dazu, dass sich die Borsten wieder aufrichten und ihre ursprüngliche Position einnehmen können, wenn sie durch einen Abstreifer hindurchgezogen und dabei von diesem umgelegt worden sind.

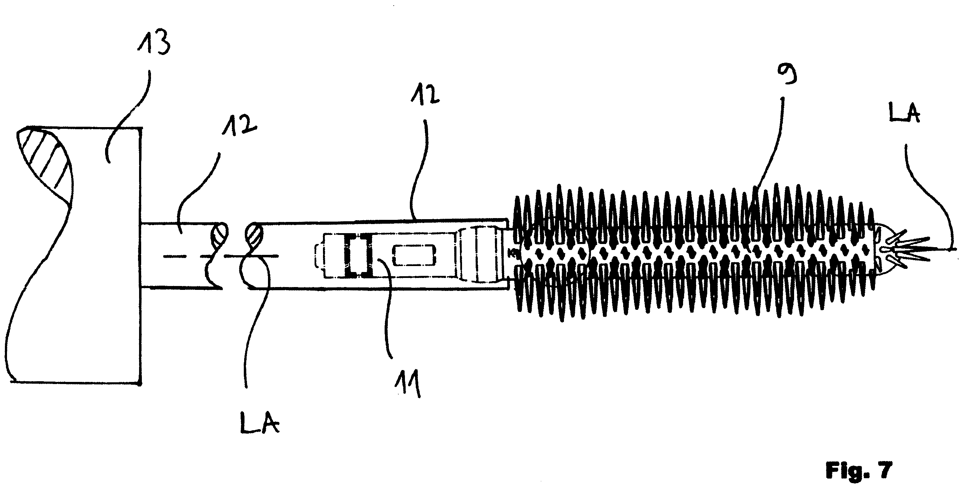

Die Fig. 7 zeigt vorab, wie der erfindungsgemäße Applikator in seiner bevorzugten Form als Ganzer aussieht.

Der mit den sogleich näher zu erörterten Borsten 1 besetzte, meist zylindrische Borstenträger 9 ist - bevorzugt über seinen Kupplungsabschnitt 11 - mit dem Stiel 12 verbunden. Der Borstenträger 9 besitzt eine Längsachse, die hier seiner Zylinderachse entspricht. Die Längsachse des Stiels 12, der meist zumindest bereichsweise als Rohr ausgeführt ist, fällt bevorzugt mit der Längsachse (Zylinderachse) des Borstenträgers 9 zusammen. Der Stiel 12 geht in eine Handhabe 13 über, die im Regelfall zugleich eine Verschlusskappe bzw. einen Deckel eines Kosmetikbehälters bildet.

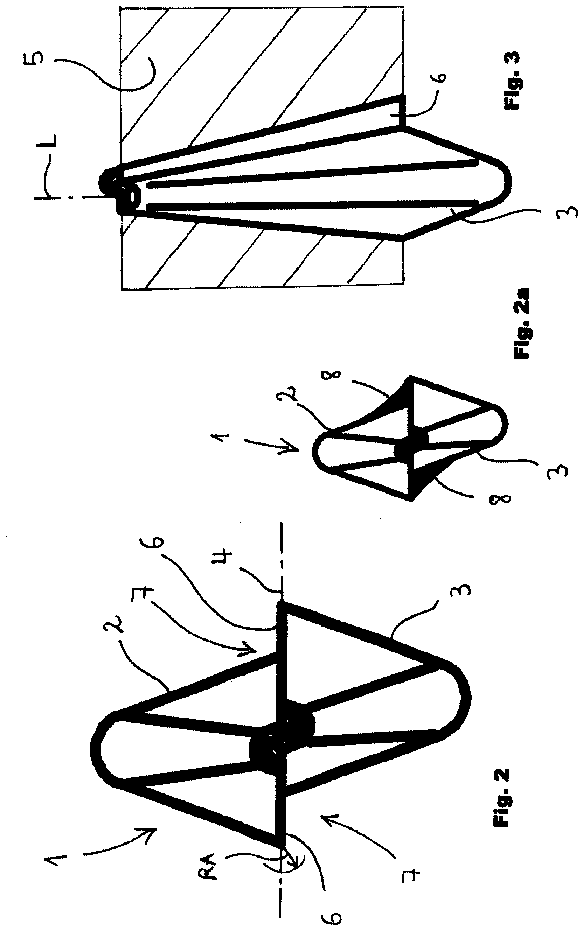

Die Figur 2 zeigt die besondere Querschnittsform, durch die sich die erfindungsgemäßen Borsten auszeichnen.

Die Figur 2 ist ein Blick auf eine solche Borste von oben, die Figur 3 ist ein Blick auf eine solche Borste perspektivisch von der Seite her.

Wie man gut erkennen kann, besteht die Borste 1 aus einer ersten Hälfte 2 und aus einer zweiten Hälfte 3. Die beiden Hälften gehen dort, wo sie aufeinandertreffen, einstückig ineinander über. Sie bilden dadurch eine einheitliche Borste, aus einem Stück. Die beiden Hälften sind dadurch entstanden, dass die die Borste bildende Kunststoffmasse der Spritzgussform erkaltet ist. Die beiden Hälften sind also gemeinsam urgeformt worden und nicht nachträglich miteinander verbunden worden. Zwischen ihnen existiert daher kein Spalt und keine Trennfuge oder Schweißnaht, die sich lösen könnte.

Die beiden Hälften 2 und 3 sind achsensymmetrisch zur gedachten Symmetrieachse 4, d. h. sie zeichnen sich dadurch aus, dass die Querschnitte der erste Hälfte 2 der Borste 1 den Querschnitten der zweiten Hälfte 3 der Borste entsprechen, wenn man sie - unverschoben gedacht - um die Symmetrieachse 4 spiegelt. Geringe örtliche Abweichungen, etwa durch Toleranzen, sind unbeachtlich.

Wie man am besten anhand der Figur 3 sieht, lässt sich eine sogenannte Verschiebeebene 5 definieren, das ist die Ebene, in der die Symmetrieachse 4 liegt, die die Figur 2 zeigt. Die beiden Hälften 2 und 3 einer Borste sind gedachtermaßen entlang der Verschiebeebene 5 relativ zueinander verschoben, im Regelfall auf ganzer Länge der Borste 1, entlang von deren Längsachse L gesehen. Wie sich bereits aus dem zuvor Gesagten ergibt, ist die Verschiebung, was die Borste anbetrifft, lediglich gedanklicher Art - sie ist konstruktiv beim Formenbau ausgeführt worden, indem die beiden Kavitätsabschnitte, die die Hälften der Borste abbilden, bei der Herstellung der Spritzgussform verschoben positioniert angebracht worden sind.

Durch diese Verschiebung der beiden Hälften 2 und 3 einer Borste 1 relativ zueinander entsteht an jeder Borste an zwei sich gegenüberliegenden Stellen ein ebener Bereich bzw. eine Ebene 6 - dort, wo die entsprechende Hälfte 2 aufgrund der Verschiebung nicht mehr an der gegenüberliegenden Hälfte 3 anliegt. Diese Ebene 6 ist im Regelfall auf ganzer Länge bzw. auf mindesten 90 % der Länge der Borste anzutreffen, vom Borstenfuß bis zur Borstenspitze und meist genau radial relativ zum Borstenträger orientiert. Sie vermag dadurch eine tangential zum Borstenbesatz zwischen die Borsten eingeschobene Wimper zu stoppen und zur Krümmung zu bringen, sobald die Wimpernspitze auf die Ebene 6 auftrifft. Dadurch wird das Maß, in dem die Wimper mithilfe des Besatzes aus den erfindungsgemäßen Borsten mit Masse befrachtet wird, merklich beeinflusst, im positiven Sinne.

Da sich die Borste von ihrem Fuß zu ihrer Spitze hin verjüngt, nimmt die Erstreckung dieser Ebene 6 in Richtung senkrecht zur Borstenlängsachse L vom Borstenfuß zur Borstenspitze ab, bevorzugt stetig.

Bevorzugt verbindet die Ebene 6 zwei größere Seitenflächen der Borste, während die kleineren Seitenflächen weiter entfernt liegen, vgl. Fig. 2.

Durch die besagte Verschiebung entsteht ausweislich der Fig. 2 an jeder Borste 1 an zwei sich gegenüberliegenden Flanken eine (in Richtung entlang der Längsachse mit einem Neigungswinkel ihr gegenüber von meist ≤ 5°) verlaufende Nut bzw. Vertiefung 7. Diese Vertiefung 7 ist auch nach dem Durchgang einer Borste durch den Abstreifer noch mit Kosmetikmasse 8 gefüllt, so wie das die Figur 2a zeigt.

Als besonders günstig hat es sich erwiesen, wenn die Borstenkanten 14, die durch Verschiebung der Borstenhälften 2, 3 entstehen, scharfkantig sind. Das sind sie jedenfalls dann, wenn die diese Borstenkante bildenden Oberflächen der Borste mit einem Radius RA ≤ 0,001 mm ineinander übergehen.

Bemerkenswert ist, dass man anhand der Figuren erkennt, dass die beiden Hälften 2, 3 entlang der Verschiebeebene 5 bzw. ihrer Symmetrieachse 4 relativ zueinander soweit verschoben sind, dass die Spitzen der beiden Hälften sich noch auf mindestens 30 % der Länge, die ihr Querschnitt entlang der Symmetrieachse 4 aufweist, überlappen.

Für andere Anwendungsfälle kann es besonders günstig sein, die beiden Hälften der Borsten so weit gegeneinander zu verschieben, dass sich die Borstenspitzen nicht mehr treffen, sondern jede Borste eine Doppelspitze aufweist - die beiden Borstenhälften treffen sich erst unterhalb der Doppelspitze wieder und gehen dann dort einstückig ineinander über. In dem Spalt zwischen der Doppelspitze kann Masse gespeichert werden und es können mit Hilfe des Spalts Wimpern gegriffen bzw. geklemmt werden, etwa um ein Curling auszuführen.

In einem besonders bevorzugten Ausführungsbeispiel haben die erfindungsgemäßen Borsten jeweils die Gestalt einer Pyramide. Diese Pyramide besitzt (vor dem gedachten Verschieben) vorzugsweise einen rautenförmigen Grundriss, bei dem bevorzugt die beiden spitzwinkligeren Ecken der Raute abgerundet sind.

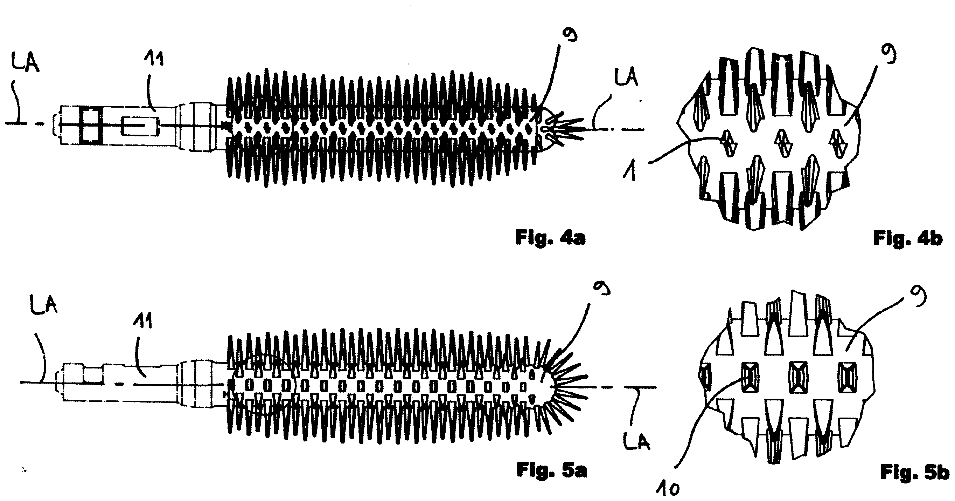

Die Figuren 4a, 4b und 5a, 5b zeigen den gesamten Applikator und lassen erkennen, wie die erfindungsgemäßen Borsten auf diesem angeordnet sind.

Der Applikator besteht aus einem Borstenträger 9. Hiervon stehen die Borsten 1 und 10 in radialer Richtung, vorzugsweise genau in radialer Richtung, ab. Bei dem ersten Ausführungsbeispiel bestehen die Borsten 1, 10 und der Borstenträger 9 aus dem gleichen Material, sie sind einstückig miteinander verbunden, denn sie sind im Regelfall durch einen einzigen Spritzgussvorgang in einem Arbeitsschritt entstanden.

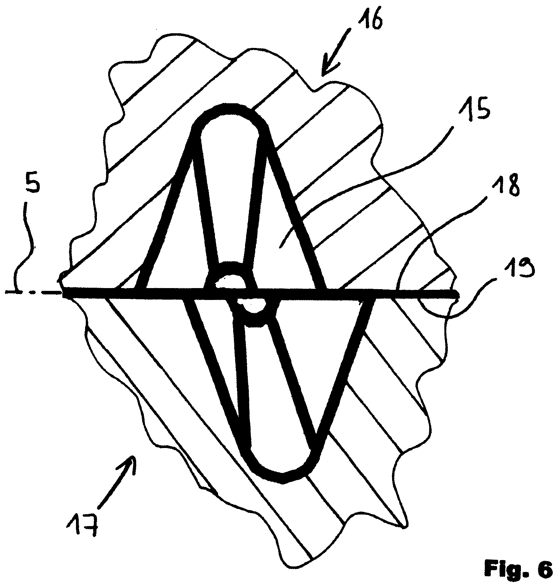

Wie man sieht, geht der Borstenträger 9 hier in einen Kupplungsabschnitt 11 über. Dieser Kupplungsabschnitt dient zur Verbindung mit einem Stiel 12, der seinerseits in eine Handhabe 13 übergeht, so wie das in Figur 6 angedeutet gezeigt ist.

Bemerkenswert ist noch, dass sich die Borsten 1 mit dem hier beschriebenen speziellen Querschnitt und anders gestaltete Borsten 10 in Umfangsrichtung des Applikators gesehen abwechseln.

Im diesem Ausführungsbeispiel, das besonders bevorzugt ist, ist es so, dass an zwei sich diametral gegenüberliegenden Seiten des Borstenträgers 9 mindestens drei in Richtung der Applikatorlängsachse LA parallele Reihen von Borsten 1 mit dem erfindungsgemäßen Querschnitt vorgesehen sind, vgl. Figur 4a, 4b. Dreht man den Applikator um 90°, so dass er ein Bild bietet, wie es die Figuren 5a, 5b zeigen, dann sieht man, dass bei dem hier beschriebenen, besonders bevorzugten Ausführungsbeispiel auch die konventionellen Borsten 10 an sich diametral gegenüberliegenden Seiten des Borstenträgers 9 mindestens drei zur Längsachse LA parallele Reihen ausbilden.

Den so entstehenden unterschiedlichen Bereichen des Borstenbesatzes kommen unterschiedliche Funktionen zu. Der Abschnitt, in dem sich mehrere Reihen mit den besonderen, erfindungsgemäßen Borsten befinden, dient zum Auftragen der Kosmetikmasse bzw. Mascaramasse auf die Augenwimpern. Sobald diese mit der erforderlichen Menge an Mascaramasse befrachtet sind, kann die Benutzerin den Applikator um 90° drehen und dann mithilfe der konventionellen Borsten 10 die nötige Kämmwirkung erreichen und/oder ein Curling vornehmen, ohne weiterhin einen starken, zusätzlichen Masseauftrag in Kauf nehmen zu müssen.

Zweckmäßigerweise machen die erfindungsgemäß gestalteten Borsten nur einen Teil der Borsten aus, die an der Umfangsmantelfläche des Borstenträgers den Haupt-Borstenbesatz des Applikators bilden. Hierdurch wird es möglich, dem Applikator zonenweise deutlich unterschiedliche Auftragseigenschaften zu verleihen, je nachdem, in welcher Verdrehposition der Applikator bzw. sein Borstenbesatz an den Wimpernbogen herangeführt wird. Die erfindungsgemäß profilierten Borsten mit ihrem hohen Massespeichervermögen dienen dabei dazu, die Wimpern zunächst mit der erforderlichen Menge an Mascaramasse zu beschichten. Dann kann der Applikator gedreht werden, um mit den konventionellen Borsten, die deutlich geringer mit Mascaramasse befrachtet sind, den Wimpernbogen zu kämmen bzw. ein Curling vorzunehmen.

Als besonders günstig hat es sich erwiesen, wenn die Borstenhälften als Pyramiden- oder Kegelhälften gestaltet sind. Als Pyramide wird dabei ein Gebilde bezeichnet, das über einer polygonalen Grundfläche aufragt und sich unter grundsätzlicher Beibehaltung der Kanten, die durch die polygonförmige Grundfläche vorgegeben sind, nach oben hin zu seiner Spitze verjüngt. Nur müssen die Kanten dort, wo die großen Hauptflächen aufeinandertreffen, als solche nicht hervortreten, sondern können verrundet sein, bilden dann also nicht länger eine scharfe Kante, vgl. Fig. 2 und 3.

Als besonders günstig hat es sich erwiesen, wenn die beiden relativ zueinander achsensymmetrischen Pyramidenhälften - nicht relativ zueinander verschoben gedacht - eine quadratische, rechteckige, rautenförmige oder sechseckige Grundfläche aufweisen.

Alternativ können die Borsten aus zwei relativ zueinander achsensymmetrischen Kegelhälften bestehen, die - nicht relativ zueinander verschoben gedacht - eine kreisrunde, elliptische, ovale, mandelförmige oder pflaumenförmige Grundfläche aufweisen.

Anzumerken ist noch, dass es besonders günstig sein kann, die distale, dem Griff abgewandte Stirnfläche des Applikators zusätzlich mit Stirnborsten zu besetzen. Wie aus einem Vergleich der Fig. 7 und 5a hervorgeht, besteht der Stirnborstenbesatz vorzugsweise aus mindestens einer Borstenreihe, die einen Fächer aus in einer Flucht hintereinanderstehenden Borsten bildet. Vorzugsweise bilden mindestens 8 Borsten diese fächerförmige Borstenreihe. Die Borsten sind so aufgestellt, dass sie eine Reihe bilden, die sich zumindest in einem Winkel von 160° um die Stirnfläche herum erstreckt. Idealerweise überquert diese Borstenreihe dabei die Mittellängsachse LA des Applikators. Idealerweise schließt sich an diese Borstenreihe in einer Flucht beidseitig eine Borstenreihe an, die parallel zur Längsachse LA am Umfang des Borstenträgers aufgestellt ist. Besonders günstig ist es, wenn sich beidseitig neben dieser Borstenreihe jeweils noch eine weitere fächerförmige Borstenreihe erstreckt, deren Borsten Längsachsen aufweisen, die gegenüber den Längsachsen der erstgenannten Borstenreihe jeweils um mindestens 20° geneigt sind, so dass sich an den zentralen Borstenfächer jeweils links und rechts ein nach außen, von dem zentralen Borstenfächer weggeneigter Borstenfächer anschließt.

Bei dem bisher erörterten Ausführungsbeispiel sind der Borstenträger, der Kupplungsabschnitt und die Borsten einstückig aus der gleichen Kunststoffmasse gespritzt worden.

Ein alternatives, hier nicht zeichnerisch dargestelltes Ausführungsbeispiel besteht aus einem identisch gestalteten Applikator, bei dem ein stabförmiger Borstenträger aus einem anderen Kunststoffmaterial mit der Kunststoffmasse umspritzt wird, die auch die Borsten bildet. Der Kunststoff, der die Borsten bildet, wird also auf den Borstenträger aufgespritzt. Die Borsten bestehen dann im Regelfall aus einem Kunststoffmaterial, das flexibler ist als das Kunststoffmaterial des stabförmigen Borstenträgers.

Ein wiederum alternatives Ausführungsbeispiel zeichnet sich dadurch aus, dass ein stabförmiger, innen hohler Borstenträger verwendet wird, dessen Wandstärke derart dünnwandig ist, dass die in den inneren Hohlraum des Borstenträgers eingespritzte zweite Kunststoffmasse die Wand des Borstenträgers nach außen durchbricht und dadurch in die den Borstenträger umgebenden Borsten Kavitäten einschießt, wo sie die Borsten bildet. Auch bei diesem Ausführungsbeispiel bestehen die Borsten dann im Regelfall aus einem Kunststoffmaterial, das flexibler ist als das Kunststoffmaterial des stabförmigen Borstenträgers.

Schließlich zeichnet sich ein wiederum alternatives Ausführungsbeispiel dadurch aus, dass der Applikator im Sandwich-Spritzguss hergestellt wird. Zuerst wird in die Spritzgussform eine erste Kunststoffmasse eingespritzt, bei der es sich um die borstenformende Masse handelt. In einem zweiten Schritt wird eine zweite Kunststoffmasse eingespritzt, in die erste, noch nicht erstarrte Kunststoffmasse hinein. Auf diese Art und Weise bildet die zweite Kunststoffmasse, die im Regelfall härter ist als die erste, einen Borstenträger (und ggf. auch ein Kupplungselement) aus, der von der ersten Kunststoffmasse auf einer Stirnseite und an seinem Umfang umhüllt ist.

Die erfindungsgemäße Borstengestaltung wirkt sich auf die zur Herstellung eines solchen Applikators einzusetzende Spritzgussform besonders günstig aus, wie sie die Fig. 7 ausschnittweise zeigt - der Blick ist hier von der Seite des Borstenfußes her in die Borstenkavität 15 hinein gerichtet.

Eine solche Spritzgussform besitzt eine Anzahl solcher Borstenkavitäten 15, von denen jeweils eine nach ihrem Ausspritzen mit der Kunststoffmasse eine Borste 1 abbildet.

Dabei ist die Spritzgussform in mehrere meist kreissektorförmige Formteile 16, 17 unterteilt, die in radialer Richtung auseinanderbewegt werden können, um einen mithilfe der Spritzgussform spritzgegossenen Applikator entformen zu können, was hier nicht im Einzelnen zeichnerisch dargestellt ist.

Ein erstes und ein zweites Formteil 16, 17 liegen mit ihren ebenen Flanken 18, 19 entlang einer Trennebene bei geschlossener Form dicht gegeneinander an. Sie bilden gemeinsam für jede Borste eine Borstenkavität 15. Die Kavitäten für eine Borstenreihe sind entlang der Trennebene 5 angeordnet, die hier senkrecht zur Zeichenebene verläuft.

Für jede erfindungsgemäße Borste wird die Borstenkavität dadurch gebildet, dass die eine Hälfte dieser Borstenkavität in dem ersten Formteil ausgebildet ist und eine zweite Hälfte der Kavität in dem zweiten Formteil ausgebildet ist. Jede Hälfte der Kavität ist nicht nur auf der Seite des Borstenfußes, sondern auch auf der Seite der Trennebene, in der die beiden Formteile gegeneinander anliegen, offen. Die erste und die zweite Hälfte der jeweiligen, insgesamt eine Borste formenden Kavität sind in Richtung entlang der Trennebene relativ zueinander verschoben positioniert und überlappen sich teilweise. Auf diese Art und Weise bildet jede Hälfte der Kavität in dem einen Formteil zusammen mit der ihr zugeordneten anderen Hälfte der Kavität in dem anderen Formteil eine vollständige Borstenkavität aus, die nur auf der Seite des Borstenfußes offen ist und ggf. auf der Seite der Borstenspitze eine Belüftungsöffnung aufweist.

Nach dem Spritzen der Borste werden die Formteile 16 und 17 mit einer Bewegungskomponente in Richtung senkrecht zu den ebenen Flanken 18 und 19, mit denen sie im geschlossenen Zustand gegeneinander anliegen, auseinander bewegt. Dadurch öffnet sich die Form genau an der Ebene 6 jeder Borste, sodass der hier an der Borste entstandene Sprung leicht ausgeformt werden kann und beim Ausformen keine Schwierigkeiten bereitet. Genau hierdurch zeichnet sich die erfindungsgemäße Spritzgussform bzw. das erfindungsgemäße Verfahren aus. Denn das Ausformen des Sprungs, mit dem die Ebene 6 in die beiden großen Seitenflächen der Borste übergeht, die sie unmittelbar miteinander verbindet, würde bei einer an dieser Stelle ungeteilten Form Schwierigkeiten bereiten und nicht selten zum Abreißen der Borste führen, weil sie sich beim Herausziehen des fertig gespritzten Applikators noch nicht hinreichend von der Wand der Formkavität getrennt hat.

Die beiden Hälften der Kavität sind im Regelfall spiegelsymmetrisch gleich gestaltet, was die Fertigung vereinfacht.

### Bezugszeichenliste

- 1: Borste
- 2: erste Hälfte einer Borste
- 3: zweite Hälfte einer Borste
- 4: Symmetrieachse
- 5: Verschiebeebene
- 6: ebener Bereich einer Borste
- 7: Vertiefung
- 8: Kosmetikmasse
- 9: Borstenträger
- 10: anders gestaltete Borste
- 11: Kupplungsabschnitt
- 12: Stiel
- 13: Handhabe
- 14: Borstenkante
- 15: Borstenkavität
- 16: erstes Formteil
- 17: zweites Formteil
- 18: ebene Flanke des ersten Formteils
- 19: ebene Flanke des zweiten Formteils

- L: Länge einer Borste
- FD: maximale Erstreckung einer Borste in ihrem Fußbereich
- LF: Lotfußpunkt einer Borste
- A: elastische Auslenkung einer Borste
- RA: Radius
- LS: Längsachse Stirnborste
- LA: Längsachse Applikator

## Patentansprüche

1. Kosmetikapplikator mit einem Borstenträger (9), der in einen Stiel (12) übergeht, mit dem der Borstenträger (9) mit einer Handhabe (13) verbunden ist, oder in einen Kupplungsabschnitt (11) zur Verbindung des Borstenträgers (9) mit einem solchen Stiel (12), wobei der Borstenträger (9) eine Vielzahl von jeweils einstückigen Borsten (1) mit der Länge (L) trägt, **dadurch gekennzeichnet, dass** die Borsten (1) aus zwei relativ zueinander achsensymmetrischen, gedachten Borstenhälften (2, 3) bestehen, die entlang einer Verschiebeebene, in der sich ihre - auf den gedacht unverschobenen Zustand bezogene - Symmetrieachse (4) befindet, relativ zueinander verschoben und durch gemeinsames Urformen einstückig miteinander verbunden sind, wobei jede der Borstenhälften (2, 3) einen ebenen Bereich (6) der Borste (1) ausbildet, der in der Verschiebeebene (5) liegt und die beiden Borstenhälften dort, wo sie aufeinandertreffen, einstückig ineinander übergehen.

2. Kosmetikapplikator nach Anspruch 1, **dadurch gekennzeichnet, dass** sich die Borsten (1) von ihrem Fuß bis zu ihrer Spitze stetig verjüngen.

3. Kosmetikapplikator nach Anspruch 2, **dadurch gekennzeichnet, dass** die beiden Hälften (2, 3) entlang ihrer Symmetrieachse (4) relativ zueinander soweit verschoben sind, dass die Spitzen der beiden Hälften (2, 3) nebeneinanderliegen, so dass sich die Borstenspitzen nicht mehr treffen.

4. Kosmetikapplikator nach einem der vorhergehenden Ansprüche, **dadurch gekennzeichnet, dass** die nach Maßgabe des Anspruchs 1 gestalteten Borsten (1) nur einen Teil der Borsten (1, 10) ausmachen, die gemeinsam den Borstenbesatz des Applikators bilden.

5. Kosmetikapplikator nach einem der vorhergehenden Ansprüche, **dadurch gekennzeichnet, dass** die Hälften (2, 3) Pyramiden- oder Kegelhälften sind.

6. Kosmetikapplikator nach Anspruch 5, **dadurch gekennzeichnet, dass** die Borsten aus zwei relativ zueinander achsensymmetrischen Pyramidenhälften bestehen, die - nicht relativ zueinander verschoben - eine dreieckige, quadratische, rechteckige, rautenförmige oder sechseckige Grundfläche aufweisen.

7. Kosmetikapplikator nach einem der Ansprüche 1 bis 4, **dadurch gekennzeichnet, dass** die Borsten aus zwei relativ zueinander achsensymmetrischen Kegelhäften bestehen, die - nicht relativ zueinander verschoben - eine kreisrunde, elliptische, ovale, mandelförmige oder pflaumenförmige Grundfläche aufweisen.

8. Kosmetikapplikator nach einem der vorhergehenden Ansprüche, **dadurch gekennzeichnet, dass** die Kanten (14), die durch die Verschiebung der Pyramiden- oder Kegelhälften entstehen, scharfkantig sind, indem sie mit einem Radius (RA) ≤ 0,01 mm ineinander übergehen.

9. Kosmetikapplikator nach einem der vorhergehenden Ansprüche, **dadurch gekennzeichnet, dass** das distale Ende des Borstenträgers (9) an seiner freien Stirnseite mit Stirnborsten besetzt ist.

10. Kosmetikapplikator nach einem der vorhergehenden Ansprüche, **dadurch gekennzeichnet, dass** die Längsachse der Stirnborsten mit der Längsachse des Borstenträgers (9) einen Winkel einschließt, der kleiner als 35° ist.

11. Kosmetikapplikator nach Anspruch 10, **dadurch gekennzeichnet, dass** in einer Ebene, in der die Längsachse (LA) des Applikators liegt, auch die Längsachsen (LS) von mindestens vier der Stirnborsten liegt.

12. Kosmetikapplikatorsystem umfassend einen Kosmetikvorratsbehälter, darin bevorratet gehaltene Kosmetikmasse, vorzugsweise in Gestalt von Mascaramasse, einen Abstreifer und einen Applikator, der in unbenutztem Zustand durch den Abstreifer hindurch in den Kosmetikbehälter eingeschoben ist und in den Kosmetikvorrat eintaucht, und der zum Zwecke der Applikation durch den Abstreifer hindurch aus dem Kosmetikvorratsbehälter herausgezogen und an die zu behandelnde Stelle herangeführt werden kann, **dadurch gekennzeichnet, dass** der Applikator ein Applikator nach einem der Ansprüche 1 bis 11 ist.

## Claims

1. A cosmetic applicator having a bristle support (9) that transitions into a wand (12) which connects the bristle support (9) to a handle (13), or transitions into a coupling section (11) for connecting the bristle support (9) to such a wand (12), wherein the bristle support (9) carries a plurality of respective one-piece bristles (1), each of the bristles having the length (L), **characterized in that** the bristles (1) are composed of two imaginary bristle halves (2, 3) that are axially symmetrical relative to each other and are offset relative to each other along an offset plane in which a symmetry axis (4) - which refers to the imaginary non-offset state - lies, and are connected to each other in one piece by having been originally molded together, wherein each of the two bristle halves (2, 3) form a flat region (6) of the bristle (1) that lies in the offset plane (5) and the two bristle halves transition into each other in integral fashion at the location in which they meet each other.

2. The cosmetic applicator according to claim 1, **characterized in that** the bristles (1) taper continuously from their base to their tip.

3. The cosmetic applicator according to claim 2, **characterized in that** the two halves (2, 3) are offset relative to each other along their symmetry axis (4) to such a degree that the tips of the two halves (2, 3) are situated next to each other so that the tips of the bristles no longer meet.

4. The cosmetic applicator according to one of the preceding claims, **characterized in that** the bristles (1) designed according to claim 1 make up only some of the bristles (1, 10) that together form the bristle set of the applicator.

5. The cosmetic applicator according to one of the preceding claims, **characterized in that** the halves (2, 3) are pyramid halves or cone halves.

6. The cosmetic applicator according to claim 5, **characterized in that** the bristles are composed of two pyramid halves that are axially symmetrical relative to each other and which - not being offset relative to each other - form a triangular, square, rectangular, rhomboid or hexagonal base.

7. The cosmetic applicator according to one of claims 1 to 4, **characterized in that** the bristles are composed of two cone halves that are axially symmetrical relative to each other and which - not being offset relative to each other - form a circular, elliptical, oval, almond-shaped or plum-shaped base.

8. The cosmetic applicator according to one of the preceding claims, **characterized in that** the edges (14), which are produced by the offsetting of the pyramid halves or cone halves, are sharp-edged **in that** the edges transition into each other with a radius (RA) of ≤ 0.01 mm.

9. The cosmetic applicator according to one of the preceding claims, **characterized in that** the distal end of the bristle support (9) has end bristles at its free end.

10. The cosmetic applicator according to one of the preceding claims, **characterized in that** the longitudinal axis of the end bristles enclose an angle of less than 35° with the longitudinal axis of the bristle support (9).

11. The cosmetic applicator according to claim 10, **characterized in that** the longitudinal axes (LS) of at least four of the end bristles lie in a plane in which the longitudinal axis (LA) of the cosmetic applicator also lies.

12. A cosmetic applicator system including a cosmetic storage receptacle, a cosmetic compound, preferably in the form of mascara, contained within the cosmetic storage receptacle, a stripper and an applicator which, when not in use, is inserted through the stripper into the cosmetic storage receptacle and dips into the cosmetic storage, and, for purposes of application, can be pulled out of the cosmetic storage receptacle through the stripper and guided to the application point, **characterized in that** the applicator is an applicator according to one of claims 1 to 11.

## Revendications

1. Applicateur cosmétique avec un support de poils (9) qui se transforme dans une tige (12) qui relie le support de poils (3) à une poignée (13), ou dans un tronçon d'accouplement (11) pour relier le support de poils (9) à une telle tige (12), le support de poils (9) portant une pluralité de poils monoblocs (1) de longueur (L), **caractérisé en ce que** les poils (1) sont constitués de deux moitiés de poils (2, 3) imaginaires qui sont axialement symétriques l'une par rapport à l'autre et qui sont décalées l'une par rapport à l'autre le long d'un plan de décalage dans lequel se trouve leur axe de symétrie (4) - se référant à l'état imaginaire non décalé - et qui sont reliées l'une à l'autre en une seule pièce par formage initial conjoint, chacune des moitiés de poils (2, 3) formant une région plane (6) du poil (1) qui se situe dans le plan de décalage (5) et les deux moitiés de poils se transforment l'une en l'autre de manière intégrante à l'endroit où elles se rencontrent.

2. Applicateur cosmétique selon la revendication 1, **caractérisé en ce que** les poils (1) s'effilent en continu de leur pied à leur pointe.

3. Applicateur cosmétique selon la revendication 2, **caractérisé en ce que** les deux moitiés (2, 3) sont décalées l'une par rapport à l'autre le long de leur axe de symétrie (4) dans telle mesure que les pointes des deux moitiés (2, 3) se trouvent l'une à côté de l'autre de sorte que les pointes des poils ne se rencontrent plus.

4. Applicateur cosmétique selon l'une des revendications précédentes, **caractérisé en ce que** les poils (1) conçus selon la revendication 1 ne constituent qu'une partie des poils (1, 10) qui forment ensemble la garniture de poils de l'applicateur.

5. Applicateur cosmétique selon l'une des revendications précédentes, **caractérisé en ce que** les moitiés (2, 3) sont des moitiés de pyramide ou de cône.

6. Applicateur cosmétique selon la revendication 5, **caractérisé en ce que** les poils sont constitués de deux moitiés de pyramide qui sont axialement symétriques l'une par rapport à l'autre et qui - non décalées l'une par rapport à l'autre - ont une base triangulaire, carrée, rectangulaire, en forme de losange ou hexagonale.

7. Applicateur cosmétique selon l'une des revendications 1 à 4, **caractérisé en ce que** les poils sont constitués de deux moitiés de cône qui sont axialement symétriques l'une par rapport à l'autre et qui - non décalées l'une par rapport à l'autre - ont une base circulaire, elliptique, ovale, en forme d'amande ou de prune.

8. Applicateur cosmétique selon l'une des revendications précédentes, **caractérisé en ce que** les arêtes (14), qui résultent du décalage des moitiés de pyramide ou de cône, sont des arêtes vives en se transformant les unes en les autres d'un rayon (RA) ≤ 0,01 mm.

9. Applicateur cosmétique selon l'une des revendications précédentes, **caractérisé en ce que** l'extrémité distale du support de poils (9) est pourvue de poils frontaux sur son côté frontal libre.

10. Applicateur cosmétique selon l'une des revendications précédentes, **caractérisé en ce que** l'axe longitudinal des poils frontaux et l'axe longitudinal du support de poils (9) incluent un angle qui est inférieur à 35°.

11. Applicateur cosmétique selon la revendication 10, **caractérisé en ce que** les axes longitudinaux (LS) d'au moins quatre des poils frontaux se situent dans un plan dans lequel se trouve également l'axe longitudinal (LA) de l'applicateur.

12. Système d'applicateur cosmétique comprenant un récipient contenant un produit cosmétique, une masse cosmétique, de préférence sous forme de mascara, stockée dans celui-ci, un racleur et un applicateur qui, lorsqu'il n'est pas utilisé, est introduit à travers le racleur dans le récipient contenant le produit cosmétique et immerge dans la masse cosmétique, et qui, aux fins de l'application, peut être extrait à travers le racleur du récipient contenant le produit cosmétique et amené à la zone à traiter, **caractérisé en ce que** l'applicateur est un applicateur selon l'une des revendications 1 à 11.
